# EUROPEAN PATENT APPLICATION

(11) **EP 4 748 685 A1**
(43) Date of publication of application: **27.05.2026**
(21) Application number: 25217911.4
(22) Date of filing: 24.11.2025
(51) Int. Cl.: B62D 21/11, B60K 1/00, B60G 9/00, B60K 5/12

(54) **A HEAVY GOODS VEHICLE**

(30) Priority: 26.11.2024 NL 2039169
(71) Applicant: DAF Trucks N.V., 5643 TW Eindhoven (NL)
(72) Inventor: RAUE, Victor, 5643 TW Eindhoven (NL); PIERIK, Gerardus Lambertus Hendrikus, 5643 TW Eindhoven (NL)
(74) Representative: V.O.

(57) **Abstract**

A heavy goods vehicle having a chassis, a rear axle, an electric driving assembly, and a supporting structure configured for supporting the rear axle. The chassis comprises a ladder frame having two longitudinal members and at least one cross member. The electric driving assembly includes an electric motor arranged for generating a driving force, a transmission arranged for adjusting the driving force transmitted from the electric motor, an axle assembly, a torque tube and a differential arranged for splitting the driving force to driving wheels of the heavy goods vehicle, and an assembly housing arranged for housing at least the electric motor of the electric driving assembly. An electric motor-side suspension is arranged for suspending the assembly housing to the chassis frame at a motor-side end region of the assembly housing. The supporting structure configured for supporting the rear axle is formed by the electric driving assembly.

## Description

The invention relates to a heavy goods vehicle having a chassis, a rear axle, an electric driving assembly, and a supporting structure configured for supporting the rear axle;
the chassis comprising a ladder frame having two longitudinal members and at least one cross member;
the electric driving assembly including:
   an electric motor arranged for generating a driving force;
   a transmission arranged for adjusting the driving force transmitted from the electric motor;
   an axle assembly, a torque tube and a differential arranged for splitting the driving force to driving wheels of the heavy goods vehicle; and
   an assembly housing arranged for housing at least the electric motor of the electric driving assembly; and
   an electric motor-side suspension arranged for suspending the assembly housing to the chassis frame at a motor-side end region of the assembly housing.

Such a heavy goods vehicle is for example known from EP3693195A. In this known heavy goods vehicle the supporting structure supporting the rear axle is a support arm structure, which is rotatably mounted about a rotation axis transverse to the longitudinal members. The known support arm structure comprises a first pivot bearing defining the rotation axis. In addition, the support arm structure has a bearing point for supporting the drive axle. The known electric driving assembly or drive unit is mounted on a second pivot bearing also defining the said rotation axis. The electric driving assembly is further connected to the drive axle in order to be forced into a rotary movement about the rotation axis during use-related movements of the drive axle in the vertical direction. Although in this known heavy goods vehicle the electric driving assembly and the supporting structure can be rotated essentially together about the common rotation axis, making it possible for the electric driving assembly and the supporting structure to carry out an essentially common rotary movement during movements of the rear axle in the vertical direction, this known vehicle motor construction can be said to be rather complicated.

It is an object of the invention to provide a heavy goods vehicle in which the suspension of the electric driving assembly and the supporting structure configured for supporting the rear axle is less complex. It is another object of the invention to provide an alternative suspension of the electric driving assembly and the rear axle.

According to the invention at least one of these objects is obtained by providing a heavy goods vehicle having a chassis, a rear axle, an electric driving assembly, and a supporting structure configured for supporting the rear axle;
the chassis comprising a ladder frame having two longitudinal members and at least one cross member;
the electric driving assembly including:
   an electric motor arranged for generating a driving force;
   a transmission arranged for adjusting the driving force transmitted from the electric motor;
   an axle assembly, a torque tube and a differential arranged for splitting the driving force to driving wheels of the heavy goods vehicle; and
   an assembly housing arranged for housing at least the electric motor of the electric driving assembly; and
   an electric motor-side suspension arranged for suspending the assembly housing to the chassis frame at a motor-side end region of the assembly housing, characterized in that the supporting structure configured for supporting the rear axle is formed by the electric driving assembly. It is the insight of the present invention that the suspension of the electric driving assembly and the supporting structure configured for supporting the rear axle can be made less complex when the supporting structure configured for supporting the rear axle is formed by the electric driving assembly. In particular it is the insight of the invention that a separate supporting structure for supporting the rear axle can be dispensed with and that the electric driving assembly including the electric motor-side suspension can also be used for supporting the rear axle thereby reducing the number of components needed for supporting the electric driving assembly and the rear axle.

In an embodiment of a heavy goods vehicle according to the invention the electric motor-side suspension is configured for only allowing rotational movements of the assembly housing. In this manner translational movements are restricted and thus movements of the rear axle are more defined.

In a further embodiment of a heavy goods vehicle according to the invention the assembly housing is suspended on the electric motor-side suspension on mounting points, wherein the mounting points at least substantially coincides with the centre of gravity of the electric driving assembly. In this manner the mass of the electric driving assembly does not have a negative impact on the driving comfort and roadholding and the vertical travel in pitch movement of the rear axle is reduced.

In another embodiment of a heavy goods vehicle according to the invention the electric motor-side suspension is configured for having a roll pole line of the rear axle positioned above the electric motor and a real or virtual pitch pole line of the rear axle positioned below the electric motor. By positioning the roll pole line above the electric motor the vertical distance between the centre of gravity of the electric motor or the electric driving assembly and the roll pole is relatively thereby reducing the needed roll stabilisation forces. The lateral stability of the heavy goods vehicle can thereby be improved. By positioning the real or the virtual pitch pole line below the electric motor it can be enabled that the wheels roll smoothly over road irregularities, thereby reducing the unwanted longitudinal reaction forces on the heavy gods vehicle without impairing the clearance underneath the chassis.

In one embodiment of a heavy goods vehicle according to the invention the electric motor-side suspension is configured for having a virtual pitch pole line of the rear axle positioned below the electric motor, wherein the suspension comprises a four rod linkage, preferably the four rod linkage is formed by two inverted U-shaped yokes. In this manner unwanted yaw movements of the rear axle are constrained, hence a Panhard rod or an equivalent mechanism that reduces sideways movements of the rear axle can be dispensed with.

In an alternative embodiment of a heavy goods vehicle according to the invention the electric motor-side suspension is configured for having a real pitch pole line of the rear axle positioned below the electric motor, wherein the electric motor-side suspension comprises a single yoke unit, wherein an upper end of the single yoke unit is connected to the at least one cross member of the ladder frame and the real pitch pole line is situated at a lower end of the single yoke unit. Although in this alternative embodiment a Panhard rod or an equivalent mechanism that reduces sideways movements of the rear axle is needed the suspension is simplified with regard to the embodiment with a four rod linkage.

In a further alternative embodiment of a heavy goods vehicle according to the invention the electric motor-side suspension comprises rigid brackets fixed to cross members of the ladder frame and wherein the assembly housing is mounted to the rigid brackets by means of rubber mounts. In particular the electric motor-side suspension is configured for having the roll pole line of the rear axle and the pitch pole line of the rear axle positioned at the level of the electric motor, preferably the rubber mounts are positioned around the centre of gravity of the electric motor and transmission. It is then preferred when the electric driving assembly comprises a Panhard rod arranged for transferring lateral forces from the rear axle to the chassis.

In a further embodiment of a heavy goods vehicle according to the invention the electric motor and the transmission are mounted longitudinally with regard to the heavy goods vehicle. In this manner the suspension of the electric driving assembly can be made less complex.

In a still further embodiment of a heavy goods vehicle according to the invention the electric driving assembly comprises a yoke suspension with air spring bellows positioned at the side of the rear axle opposite the electric motor for suspending the assembly housing at the side opposite the electric motor-side of the assembly housing. The present invention provides the possibility for suspending the electric driving assembly between the conventional air spring bellows and tyres of the heavy goods vehicle, dispensing with the need for redesigning the construction.

In a further embodiment of a heavy goods vehicle according to the invention the said electric driven rear axle can be connected with a secondary driven axle by means of a connecting drive shaft, connected by U-joints, transmitting driving force to the secondary driven axle, thus avoiding the need for an additional electric drive line. By this means a tandem drive is possible without the need for having a double electric drive line.

In a still further embodiment of a heavy goods vehicle according to the invention the electric driving assembly comprises a third driven axle by means of a further connecting drive shaft suspended via U-joints transmitting driving force to the third driven axle, thus forming a so called tridem drive where two axis are connected to the said electric driven rear axle.

The invention will be further explained with reference to the Figures, in which a non-limiting exemplary embodiment of according to the invention is shown:

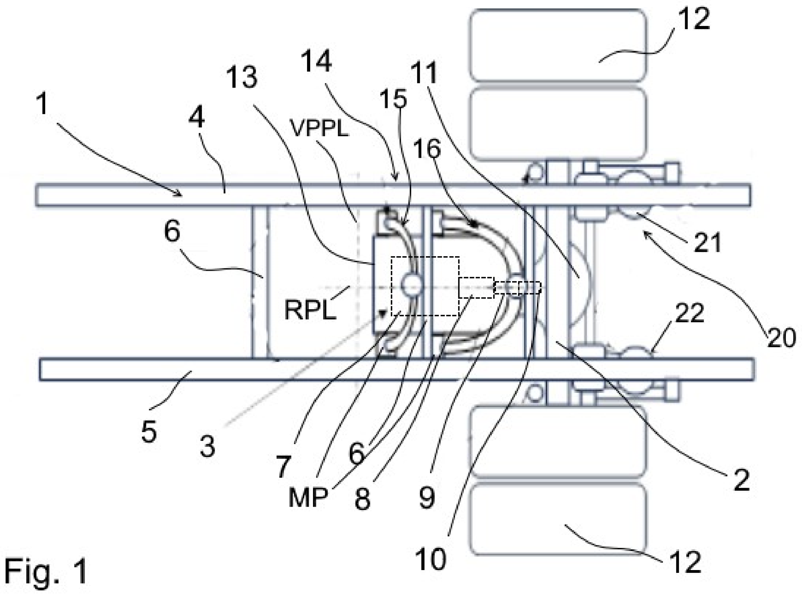

Figures 1 to 5 schematically show in top, side and rear view a heavy goods vehicle with an electric motor-side suspension configured for having a virtual pitch pole line below the electric motor and a real roll pole line above the electric motor, in which the suspension comprises a four rod linkage formed by two inverted U-shaped yokes;

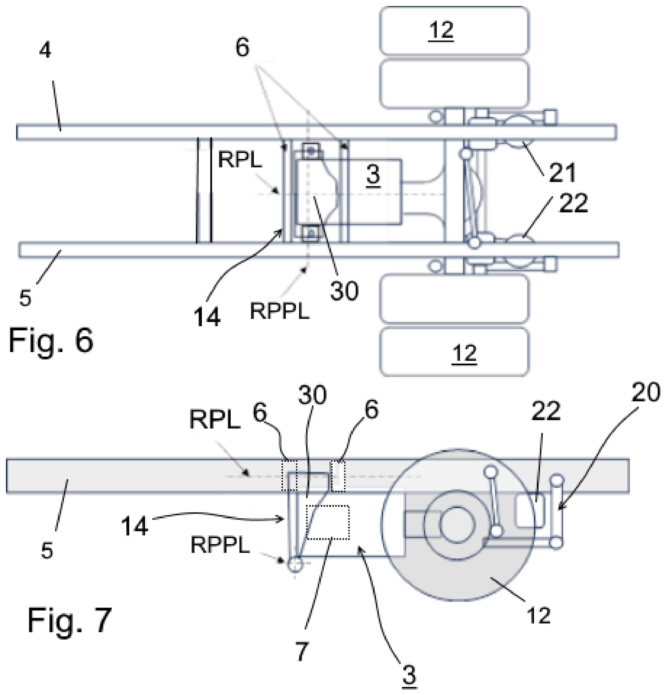

Figures 6 and 7 schematically show in top and side view, respectively, a heavy goods vehicle with an the electric motor-side suspension configured for having a real pitch pole line positioned below the electric motor and a real roll pole line above the electric motor, in which the suspension comprises a single yoke unit;

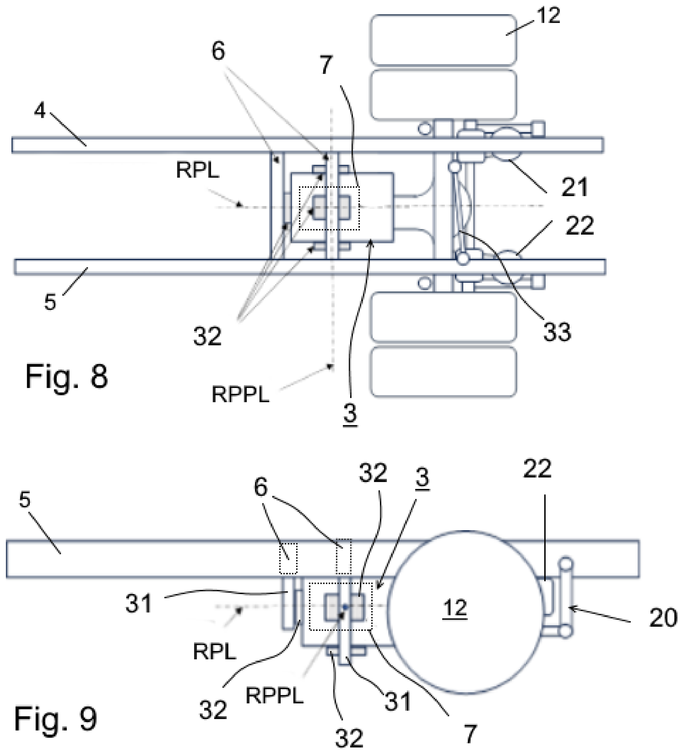

Figures 8 and 9 schematically show in top and side view, respectively, a heavy goods vehicle with an electric motor-side suspension comprising rigid brackets 3, in which the assembly housing is mounted to the rigid brackets by means of rubber mounts arranged around the centre of gravity of the electric motor and transmission; and

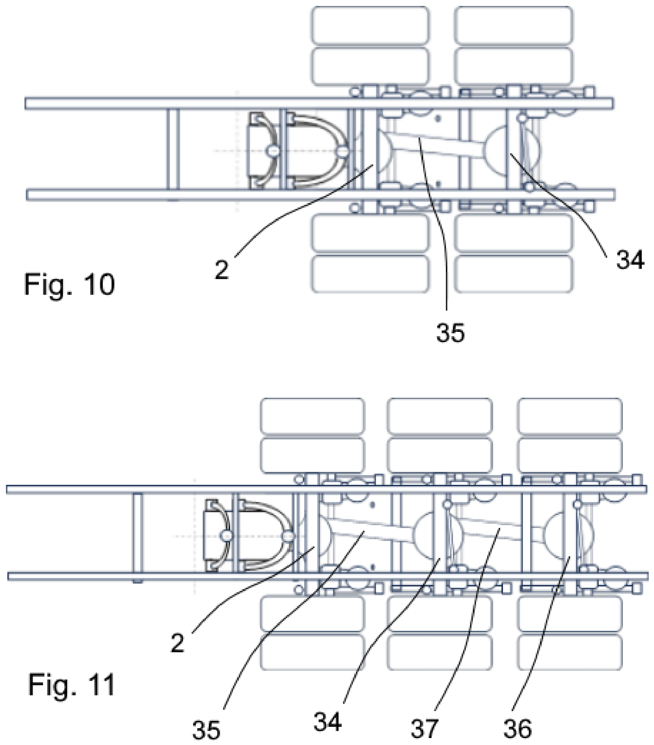

Figs. 10 and 11 schematically show a heavy goods vehicle with a tandem drive and a tridem drive, respectively.

The invention in general relates to a heavy goods vehicle of which the most relevant part for understanding the invention is schematically shown in top view in Figure 1. The heavy goods vehicle comprises a chassis 1, a rear axle 2, an electric driving assembly 3, and a supporting structure configured for supporting the rear axle 2. The chassis 1 includes a ladder frame having two longitudinal members 4, 5 and at least one cross member 6.

The electric driving assembly 3 comprises an electric motor 7 arranged for generating a driving force, a transmission 8 arranged for adjusting the driving force transmitted from the electric motor 7, an axle assembly 9, a torque tube 10 and a differential 11 arranged for splitting the driving force to driving wheels 12 of the heavy goods vehicle. This build up is generally known and therefore the components are not further described in detail and the components are indicated very schematically. At least the electric motor 7 is housed in an assembly housing 13.

According to the invention the supporting structure configured for supporting the rear axle 2 is formed by the electric driving assembly 3 which comprises an electric motor-side suspension 14 arranged for suspending the assembly housing 13 to the chassis 1 at a motor-side end region of the assembly housing 13. Preferably, the electric motor-side suspension 14 is configured for only allowing rotational movements of the assembly housing, thus strongly restricting translational movements whereby movements of the rear axle 2 are more defined. In particular the assembly housing 13 is suspended on the electric motor-side suspension 14 on mounting points MP which at least substantially coincides with the centre of gravity of the electric driving assembly 3, so that the mass of the electric driving assembly 3 does not have a negative impact on the driving comfort and vertical travel in pitch movement of the rear axle 2 is reduced.

This general concept of the invention will be described in more detail below with regard to some specific non-limiting embodiments shown in the Figures. In the embodiments shown in the Figures the electric motor 7 and the transmission 8 are mounted longitudinally with regard to the heavy goods vehicle, but the invention is also applicable to embodiments in which the electric motor 7 and the transmission 8 are mounted transversely with regard to the heavy goods vehicle. In addition, in all exemplary embodiments shown in the Figures the electric driving assembly 3 comprises a yoke suspension 20 with air spring bellows 21, 22 positioned at the side of the rear axle 2 opposite the electric motor 7 (usually behind the rear axle 2 seen in normal movement of the heavy goods vehicle) for suspending the assembly housing 14 at the side opposite the electric motor-side of the assembly housing, although in other not shown embodiments e.g. other components equivalent to air spring bellows can be used.

In the embodiments shown in Figures 1 to 7 the electric motor-side suspension 14 is configured in such a manner that a roll pole line RPL of the rear axle 2 is positioned above the electric motor 7 and a virtual pitch pole line VPPL (the embodiment of Figure 1 to 5) or real pitch pole RPPL line (the embodiment shown in Figures 6 and 7) of the rear axle 2 is positioned below the electric motor 7.

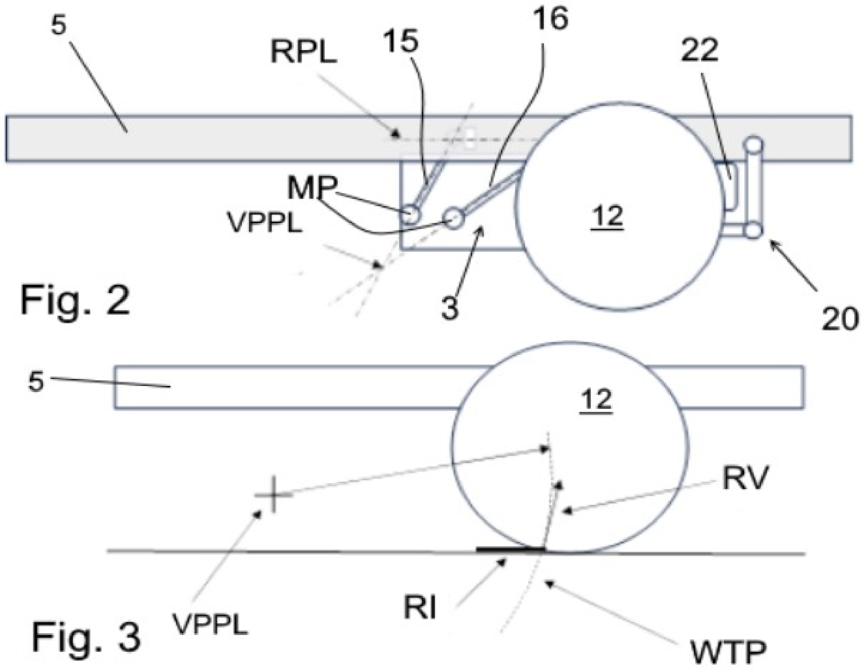

In the embodiment shown in Figures 1 to 5 the electric motor-side suspension 14 is configured for having a virtual pitch pole line VPPL of the rear axle 2 positioned below the electric motor 7, wherein the suspension 14 comprises a four rod linkage formed by two inverted U-shaped yokes 15, 16. The imaginary extension of the downwardly extending arms of the U-shaped yokes 15, 16 intersect in the VPPL as a result of the U-shaped yokes being positioned under different angles with respect to the longitudinal members 4, 5 as can be seen in Figure 2. This geometry of the U-shaped yokes 15, 16 enables the wheels 12 to roll smoothly over road irregularities RI, reducing the unwanted longitudinal reaction forces on the heavy goods vehicle as indicated in Figure 3. In this Figure 3 the road force vector on the tyre 12 due to the road irregularity RI is indicated by the arrow RV, and due to the geometry of the U-shaped yokes 15, 16 the travel path of the wheel (WTP) coincides with this road force vector RV as indicated in Figure 3.

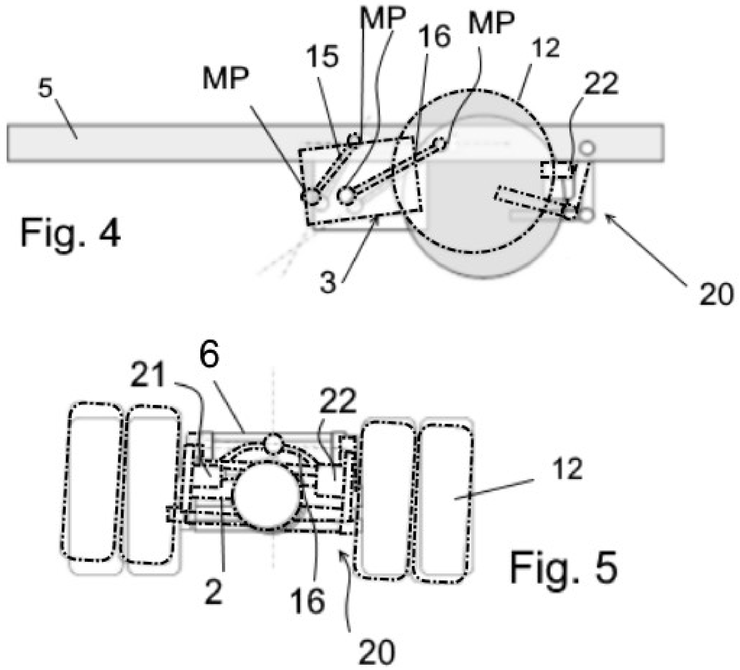

In Figures 4 and 5 pitch movement of the rear axle 2 and roll movement of the rear axle 2, respectively, are indicated by means of the solid and dash-dot lines, and clearly show that the electric motor-side suspension 14 also provides roll and pitch movement of the rear axle 2.

In the embodiment shown in Figures 6 and 7 the electric motor-side suspension 14 is configured for having a real pitch pole RPPL line of the rear axle 2 positioned below the electric motor 7. In this embodiment the electric motor-side suspension 14 comprises a single yoke unit 30. An upper end of the single yoke unit 30 is connected to, in this embodiment, two cross members 6 of the ladder frame. As clearly can be seen in Figure 7, the real pitch pole line RPPL is situated at a lower end of the single yoke unit 30. AS mentioned above, in the embodiment shown in Figures 6 and 7 the roll pole line RPL of the rear axle 2 is positioned above the electric motor 7

In the embodiment shown in Figures 8 and 9 the electric motor-side suspension 14 comprises rigid brackets 31 fixed the to cross members 6 of the ladder frame. The assembly housing 3 is mounted to the rigid brackets 31 by means of rubber mounts 32. The roll pole line RPL of the rear axle 2 and the (real) pitch pole line RPPL of the rear axle 2 are positioned at the level of the electric motor 7 and in the embodiment shown in Figures 8 and 9 around the centre of gravity of the electric motor 7 and transmission. In this embodiment the electric driving assembly 3 comprises a Panhard rod 33 arranged for transferring lateral forces from the rear axle 2 to the chassis 1.

In the embodiment shown in Figure 10 the electric driven rear axle 2 is connected with a secondary driven axle 34 by means of a connecting drive shaft 35, connected by U-joints, transmitting driving force to the secondary driven axle 34, thus forming a so called tandem drive.

In the embodiment shown in Figure 11 the electric driving assembly 3 comprises a third driven axle 36 by means of a further connecting drive shaft 37 suspended via U-joints transmitting driving force to the third driven axle 36, thus forming a so called tridem drive.

## Claims

1. A heavy goods vehicle having a chassis, a rear axle, an electric driving assembly, and a supporting structure configured for supporting the rear axle;
the chassis comprising a ladder frame having two longitudinal members and at least one cross member;
the electric driving assembly including:
an electric motor arranged for generating a driving force;
a transmission arranged for adjusting the driving force transmitted from the electric motor;
an axle assembly, a torque tube and a differential arranged for splitting the driving force to driving wheels of the heavy goods vehicle; and
an assembly housing arranged for housing at least the electric motor of the electric driving assembly; and
an electric motor-side suspension arranged for suspending the assembly housing to the chassis frame at a motor-side end region of the assembly housing, **characterized in that** the supporting structure configured for supporting the rear axle is formed by the electric driving assembly.

2. The heavy goods vehicle according to claim 1, wherein the electric motor-side suspension is configured for only allowing rotational movements of the assembly housing.

3. The heavy goods vehicle according to claim 1 or 2, wherein the assembly housing is suspended on the electric motor-side suspension on mounting points, wherein the mounting points at least substantially coincides with the centre of gravity of the electric driving assembly.

4. The heavy goods vehicle according to any one of the preceding claims, wherein the electric motor-side suspension is configured for having a roll pole line of the rear axle positioned above the electric motor and a real or virtual pitch pole line of the rear axle positioned below the electric motor.

5. The heavy goods vehicle according to claim 4, wherein the electric motor-side suspension is configured for having a virtual pitch pole line of the rear axle positioned below the electric motor, wherein the suspension comprises a four rod linkage.

6. The heavy goods vehicle according to claim 5, wherein the four rod linkage is formed by two inverted U-shaped yokes.

7. The heavy goods vehicle according to claim 4, wherein the electric motor-side suspension is configured for having a real pitch pole line of the rear axle positioned below the electric motor, wherein the electric motor-side suspension comprises a single yoke unit, wherein an upper end of the single yoke unit is connected to the at least one cross member of the ladder frame and the real pitch pole line is situated at a lower end of the single yoke unit.

8. The heavy goods vehicle according to claim 1, 2 or 3, wherein the electric motor-side suspension comprises rigid brackets fixed to cross members of the ladder frame and wherein the assembly housing is mounted to the rigid brackets by means of rubber mounts.

9. The heavy goods vehicle according to claim 8, wherein the electric motor-side suspension is configured for having the roll pole line of the rear axle and the pitch pole line of the rear axle positioned at the level of the electric motor, preferably the rubber mounts are positioned around the centre of gravity of the electric motor and transmission.

10. The heavy goods vehicle according to any one of the preceding claims, wherein the electric motor and the transmission are mounted longitudinally with regard to the heavy goods vehicle.

11. The heavy goods vehicle according to claim 7, 8 or 9, or claim 10 when dependent on claim 7, 8 or 9, wherein the electric driving assembly comprises a Panhard rod arranged for transferring lateral forces from the rear axle to the chassis.

12. The heavy goods vehicle according to any one of the preceding claims, wherein the electric driving assembly comprises a yoke suspension with air spring bellows positioned at the side of the rear axle opposite the electric motor for suspending the assembly housing at the side opposite the electric motor-side of the assembly housing.

13. The heavy goods vehicle according to any one of the preceding claims, wherein said electric driven rear axle is connected with a secondary driven axle by means of a connecting drive shaft, connected by U-joints, transmitting driving force to the secondary driven axle, thus forming a so called tandem drive.

14. The heavy goods vehicle according to claim 13, wherein the electric driving assembly comprises a third driven axle by means of a further connecting drive shaft suspended via U-joints transmitting driving force to the third driven axle, thus forming a so called tridem drive.
